# EUROPÄISCHE PATENTSCHRIFT

(11) **EP 4 181 252 B1**
(45) Veröffentlichungstag und Bekanntmachung des Hinweises auf die Patenterteilung: **13.03.2024**
(21) Anmeldenummer: 21207570.9
(22) Anmeldetag: 10.11.2021
(51) Int. Cl.: H01M 8/2404, H01M 10/04, C25B 9/73

(54) **MONTAGEVORRICHTUNG ZUM ANORDNEN UND STAPELN VON FLÄCHENHAFTEN BAUTEILEN ENTLANG EINER STAPELRICHTUNG**
ASSEMBLY DEVICE FOR ARRANGING AND STACKING FLAT COMPONENTS ALONG A STACKING DIRECTION
DISPOSITIF D'ASSEMBLAGE POUR DISPOSER ET EMPILER DES COMPOSANTS PLATS LE LONG D'UNE DIRECTION D'EMPILAGE

(43) Veröffentlichungstag der Anmeldung: 17.05.2023
(73) Patentinhaber: VAF GmbH, 73441 Bopfingen (DE)
(72) Erfinder: Fischer, Matthias, 73495 Stödtlen (DE)
(74) Vertreter: Schorr, Peter Karl

(56) Entgegenhaltungen:
- EP-A1- 0 561 069
- CN-A- 111 403 787
- KR-A- 20210 037 328

## Beschreibung

Die Erfindung betrifft eine Montagevorrichtung nach Anspruch 1 zum Anordnen und Stapeln von flächenhaften Bauteilen entlang einer Stapelrichtung, mit mindestens einer Werkstückträgereinrichtung, die mindestens einen Werkstückträger, der zumindest aus einer Grundplatte, zwei einander gegenüberliegenden und jeweils an der Grundplatte festgelegten Stützwänden und zwei einander gegenüberliegenden und an den Stützwänden festgelegten Seitenplatten gebildet ist und in dem flächenhafte Bauteile entlang einer Stapelrichtung in einem durch die Stützwände und die Seitenplatten umrahmten Freiraum stapelbar sind, und die mindestens eine wenigstens einen Ablageort zum Ablegen eines neuen Bauteil definierende Aufnahmeeinheit umfasst, und mit mindestens einer Ausrichteinrichtung, die mindestens eine Andrückeinheit umfasst, durch die mindestens ein an dem Ablageort abgelegtes Bauteil in eine quer zur Stapelrichtung verlaufende Ausrichtrichtung bewegbar und an ein Anschlagmittel andrückbar ist, wobei die Andrückeinheit der Ausrichteinrichtung mindestens ein Andrückmittel und mindestens einen Andrückantrieb umfasst, mit dem das Andrückmittel von einer Ruhestellung, in der das Andrückmittel zum Bauteil berührungsfrei beanstandet ist, in eine Andrückstellung überführbar ist, in der das Andrückmittel unmittelbar am mindestens einen Bauteil anliegt.

Für die Produktion und Montage von Batterien, Brennstoffzellen oder Elektrolyseuren müssen einzelne Bauteile übereinander zu Bauteilpaaren gestapelt werden.

Mehrere übereinander gestapelte Bauteile bilden dann einen so genannten "Stack".

Die Funktion des Batterie-, Brennstoffzellen- oder Elektrolyseur-Stacks hängt entscheidend von der Stapelgenauigkeit ab. Diese gilt es, über die hohe Anzahl der Bauteile über dem kompletten Stack einzuhalten.

Aus dem Stand der Technik sind Werkstückträgereinrichtungen bekannt, auf denen eine oder mehrere Bauteile angeordnet und gestapelt werden und nach Beenden des Stapelns innerhalb der Werkstückträgereinrichtung angeordnet werden. Hierbei muss beispielsweise seitens eines Roboters, der ein Bauteil greift und auf der Werkstückträgereinrichtung anordnet, stets eine neue Ablagehöhe angefahren werden, nachdem ein erstes Bauteil abgelegt worden ist. Die Vielzahl der jeweils neuen Ablageorte gefährdet die Stapelgenauigkeit.

Gattungsgemäße Montagevorrichtungen sind bekannt aus CN 111 403 787 A, KR 2021 0037328 A und EP 0 561 069 A1.

Eine Aufgabe eines Ausführungsbeispiels der Erfindung ist, eine Montagevorrichtung zum Anordnen und Stapeln von flächenhaften Bauteilen entlang einer Stapelrichtung vorzuschlagen, bei der eine Stapelgenauigkeit erhöht ist.

Diese Aufgabe wird bei einer eingangs genannten Montagevorrichtung zum Anordnen und Stapeln von flächenhaften Bauteilen entlang einer Stapelrichtung, dadurch gelöst, dass die Andrückeinheit der Ausrichteinrichtung mindestens ein Festlegemittel aufweist, das an einem Halter der Ausrichteinrichtung festgelegt ist und an dem das Andrückmittel relativ zum Festlegemittel festlegbar ist und/oder dass die Andrückeinheit der Ausrichteinrichtung mindestens ein Führungsmittel umfasst, durch das das Überführen des Andrückmittels von der Ruhestellung in die Andrückstellung entlang der Ausrichtrichtung führbar ist.

Dadurch, dass die Montagevorrichtung mindestens eine Ausrichteinrichtung umfasst, durch die das am Ablageort abgelegte Bauteil in einer quer zur Stapelrichtung verlaufenden Ausrichtrichtung bewegbar ist, kann ein abgelegtes Bauteil bezüglich der bereits abgelegten Bauteile ausgerichtet werden. Hierdurch ist die Stapelgenauigkeit des durch die Bauteile gebildeten Stacks verbesserbar.

Die Grundplatte, die beiden an der Grundplatte festgelegten Stützwände sowie die beiden an den Stützwänden festgelegten Seitenplatten, bilden einen korbartigen Werkstückträger. Eine Seitenplatte ist dabei jeweils mit seinen beiden Enden an einer Stützwand festgelegt. Die beiden Stützwände und die beiden Seitenplatten bilden einen quer zur Stapelrichtung vollständig umschlossenen Rahmen.

Die Bauteile können mittels eines Roboters am Ablageort angeordnet werden. Ferner können die Bauteile auch durch eine Fördereinrichtung, wie Förderband oder Schütte, oder manuell dem Ablageort zugeführt werden. Durch die Ausrichteinrichtung können die Anforderungen an die maschinelle oder manuelle Zuführgenauigkeit und Ablagegenauigkeit reduziert sein und die Stapelgenauigkeit durch die Ausrichteinrichtung gewährleistet werden.

Es sind Ausführungsformen der Montagevorrichtung denkbar, bei denen die Ausrichteinrichtung bezüglich des Werkstückträgers ortsfest und in Stapelrichtung unbeweglich festgelegt ist oder bei denen die Ausrichteinrichtung bezüglich des durch die Aufnahmeeinheit definierten Ablageorts ortsfest und relativ zum Werkstückträger in Stapelrichtung durch einen Ausrichtantrieb verfahrbar ist.

Wenn die Ausrichteinrichtung bezüglich des Werkstückträgers ortsfest und in Stapelrichtung unbeweglich festgelegt ist, ist der Ablageort zum Ablegen eines neuen Bauteils ebenfalls ortsfest und in Stapelrichtung konstant.

Es erweist sich jedoch als vorteilhaft, wenn der Ablageort zum Ablegen eines neuen Bauteils ortsveränderlich ist, beispielsweise, weil er sich durch das Auflegen eines weiteren Bauteils für ein hierauf anzuordnendes weiteres Bauteil um die Dicke des zuvor abgelegten Bauteils entgegen der Stapelrichtung verändert, dass die Ausrichtrichtung relativ zum Werkstückträger in Stapelrichtung durch den Ausrichtantrieb verfahrbar ist.

Wenn der Ablageort jedoch im Raum ortsfest angeordnet sein soll, erweist es sich als vorteilhaft, wenn die mindestens eine Aufnahmeeinheit, eine Auflageplatte und einen Antrieb umfasst, durch den die Auflageplatte von einer Ruheposition, in der die Auflageplatte an der Grundplatte anliegt, in eine Start-Aufnahmeposition, in der unmittelbar an der Auflageplatte ein Bauteil anordenbar ist und in der ein Abstand von Auflageplatte und Grundplatte maximal ist, und stellschrittweise in eine Mehrzahl von Zwischen-Aufnahmepositionen bis zum Erreichen einer End-Aufnahmeposition überführbar ist, in der eine vorgebbare Anzahl von Bauteilen auf der Auflageplatte gestapelt sind, wobei ein Stellschritt die Erstreckung des jeweils abgelegten Bauteils in Stapelrichtung umfasst, wobei der Ablageort zum Ablegen eines neuen Bauteil ortsfest durch die Auflageplatte in der Start-Aufnahmeposition oder in den Zwischen-Aufnahmepositionen und der End-Aufnahmeposition durch die der Auflageplatte abgewandte freie Oberfläche des Bauteils gebildet ist, die zur Auflageplatte den größten Abstand umfasst.

Hierdurch wird die Auflageplatte mit jedem auf der Auflageplatte mittelbar oder unmittelbar abgelegten Bauteil weiterhin Richtung Grundplatte verfahren. Solchenfalls ist der Ablageort ortsfest definiert und die Ausrichteinrichtung kann ortsfest und in Stapelrichtung unbeweglich festgelegt sein.

Bei einer Weiterbildung der Montagevorrichtung umfasst diese mindestens einen Höhensensor, durch den zumindest eine IST-Lage des Ablageorts in Stapelrichtung erfassbar ist und/oder durch den der Antrieb der Aufnahmeeinheit ansteuerbar ist, um die IST-Lage einer SOLL-Lage anzupassen und/oder durch den der Ausrichtantrieb der Ausrichteinrichtung ansteuerbar ist, um die Position der Ausrichteinrichtung der IST-Lage des Ablageort anzupassen.

Durch das Verwenden eines Höhensensors kann eine Position der Auflageplatte genauer angefahren oder ggf. nachjustiert werden, wenn der Ablageort im Raum ortsfest ist. Ferner kann die Ausrichteinrichtung durch den Höhensensor positionsgenauer angeordnet werden, wenn der Ablageort veränderlich ist.

Grundsätzlich ist es denkbar, dass durch die Andrückeinheit ein einziges Bauteil quer zur Stapelrichtung entlang der Ausrichteinrichtung bewegt und an das Anschlagmittel andrückbar ist. Allerdings kann bei Ausführungsformen der Montagevorrichtung vorgesehen sein, dass die Andrückeinheit mit der an dem Bauteil anliegenden Andrückfläche derart großzügig dimensioniert ist, dass die Andrückeinheit nach Bewegen in Ausrichtrichtung an mehreren Bauteilen anliegt.

Die Andrückeinheit der Ausrichteinrichtung kann technisch beliebig umgesetzt werden, sofern sie der technischen Funktion nachkommt, ein am Ablageort abgelegtes Bauteil gegen ein Anschlagmittel anzudrücken.

Durch das Vorsehen eines Führungsmittels kann die Genauigkeit der Bewegung des Überführens des Andrückmittels von der Ruhestellung in die Andrückstellung gesteigert werden.

Das Führungsmittel kann durch ein zusätzliches Bauteil gebildet sein, dass beispielsweise an dem Festlegemittel oder dem Halter der Ausrichteinrichtung festgelegt ist. Die Montagevorrichtung lässt sich bauteilreduziert ausgestalten, wenn das Führungsmittel der Andrückeinheit eine durchgehende Öffnung im Festlegemittel umfasst, die entlang der Ausrichtrichtung verläuft.

Bei einer Ausführungsform der Montagevorrichtung ist das Andrückmittel auf einer dem Bauteil zugewandten Seite des Festlegemittels angeordnet und der Andrückantrieb auf einer dem Bauteil abgewandten Seite des Festlegemittels. Um die Kraft des Andrückantriebs auf das Andrückmittel zu übertragen, erweist es sich als vorteilhaft, wenn die Andrückeinheit der Ausrichteinrichtung mindestens einen zylinderartigen Übertragungskörper umfasst, der kraftübertragend zwischen Andrückantrieb und Andrückmittel und/oder der in dem durch die durchgehende Öffnung gebildeten Führungsmittel angeordnet ist.

Um ein automatisches Rückführen des Andrückmittels in die Ruhestellung zu gewährleisten, nachdem es in die Andrückstellung überführt wurde, ist bei einer Weiterbildung der Montagevorrichtung vorgesehen, dass die Andrückeinheit der Ausrichteinrichtung ein Rückstellmittel umfasst, durch das das Andrückmittel in die Ruhestellung spannbar ist, insbesondere dass das Rückstellmittel einen Ringabschnitt am Übertragungskörper, der bezüglich der Ausrichtrichtung einen größeren Querschnitt umfasst, als die durchgehende Öffnung und der auf einer dem Andrückmittel abgewandten Seite des Festlegemittels angeordnet ist, und ein Federelement umfasst, das am Festlegemittel und am Ringabschnitt abgestützt ist und das den Übertragungskörper in die Ruhestellung vorspannt.

Um die Gefahr eines Beschädigens von Bauteilen in der Andrückstellung des Andrückmittels zu reduzieren, erweist es sich als vorteilhaft, wenn die Andrückeinheit der Ausrichteinrichtung mindestens ein Überlastschutzmittel umfasst, durch das eine von dem Andrückantrieb auf das Andrückmittel übertragenen Kraft reduzierbar ist, insbesondere wenn das Überlastschutzmittel eine in Ausrichtrichtung erstreckte Aussparung im Übertragungskörper, in der das Andrückmittel mit einen korrespondierend, insbesondere komplementär, ausgebildeten Gleitbereich anordenbar ist, einen gabelartigen Kopfabschnitt des Andrückmittels, der bezüglich der Ausrichtrichtung einen größeren Querschnitt umfasst als die Aussparung im Übertragungskörper, ein zwischen der dem Bauteil abgewandten Seite des gabelartigen Kopfabschnitt des Andrückmittels und der Aussparung im Übertragungskörper angeordnetes Dämpfelement und ein Bewegungsbegrenzungsmittel umfasst, das in den gabelartigen Kopfabschnitt auf einer dem Bauteil zugewandten Seite zumindest abschnittweise eingreift und einen Anschlag bildet und das am Übertragungskörper festgelegt ist.

Wenn das Überlastschutzmittel ein Dämpfelement zwischen den gabelartigen Kopfabschnitt des Andrückmittels und der Aussparung im Übertragungskörper umfasst, kann bei Überschreiten einer bestimmten Kraft das Dämpfelement komprimiert werden, wodurch zunächst keine weiteren Kräfte vom Andrückmittel in Richtung auf das Bauteil erfolgen.

Durch das Vorsehen des Bewegungsbegrenzungsmittels kann vermieden werden, dass sich das Andrückmittel vom Übertragungskörper lösen kann.

Die Stapelgenauigkeit lässt sich weiter verbessern, wenn die Ausrichteinrichtung mindestens eine erste Andrückeinheit umfasst, durch die mindestens ein an dem Ablageort abgelegtes Bauteil in eine quer zur Stapelrichtung verlaufende erste Ausrichtrichtung bewegbar und an ein erstes Anschlagmittel andrückbar ist, und die mindestens eine zweite Andrückeinheit umfasst, durch die das an dem Ablageort abgelegte Bauteil in eine quer zur Stapelrichtung und quer zur ersten Ausrichtrichtung verlaufende zweite Ausrichtrichtung bewegbar und an ein zweites Anschlagmittel andrückbar ist.

Solchenfalls ist ein abgelegtes Bauteil quer zur Stapelrichtung in zwei Richtungen ausrichtbar.

Um zu überprüfen, ob die Ausrichttätigkeiten der ersten Andrückeinheit und/oder der zweiten Andrückeinheit erfolgreich waren und um gegebenenfalls nachzusteuern, umfasst ein Ausführungsbeispiel der Montagevorrichtung mindestens einen Lagesensor, durch den zumindest eine IST-Lage des Bauteils in einer Ebene quer zur Stapelrichtung erfassbar ist und/oder durch den mindestens einer der ersten Andrückeinheit und/oder mindestens eine der zweiten Andrückeinheit ansteuerbar ist, um die IST-Lage einer SOLL-Lage anzupassen.

Bei einer Weiterbildung der Montagevorrichtung ist vorgesehen, dass die Werkstückträgereinrichtung mindestens einen ersten Führungsdorn, der an einer Seitenplatte angeordnet ist und das Bauteil zur Seitenplatte berührungsfrei beanstandet und der der eine Führungskante aufweist, die parallel zur Stapelrichtung verläuft und sich in Gänze oder zumindest teilweise durch den Freiraum erstreckt und die in einer korrespondierend, insbesondere komplementär, ausgebildete Nut im Bauteil am Bauteil anliegend anordenbar ist, und/oder die mindestens einen zweiten Führungsdorn umfasst, der an einer Stützwand angeordnet ist und das Bauteil zur Stützwand berührungsfrei beanstandet und der der eine Führungskante aufweist, die parallel zur Stapelrichtung verläuft und sich in Gänze oder zumindest teilweise durch den Freiraum erstreckt und die in einer korrespondierend, insbesondere komplementär ausgebildete Nut im Bauteil am Bauteil anliegend anordenbar ist, wobei mindestens einer des mindestens einen ersten Führungsdorns das Anschlagmittel, insbesondere das mindestens eine erste Anschlagmittel, und/oder wobei mindestens einer des mindestens einen zweiten Führungsdorns das Anschlagmittel, insbesondere das mindestens eine zweite Anschlagmittel, bildet.

Durch das Vorsehen von mindestens einem ersten Führungsdorn und mindestens einem zweiten Führungsdorn, sind die abgelegten Bauteile zu den Stützwänden und zu den Seitenplatten beabstandbar. Hierdurch ist die Gefahr eines Verkantens bei einer Stellbewegung der Aufnahmeeinheit reduziert.

Dadurch, dass der mindestens eine erste Führungsdorn und der mindestens eine zweite Führungsdorn mit ihren Führungskanten jeweils in einer korrespondierend, insbesondere komplementär, ausgebildeten Nut im Bauteil eingreift, kann die Stapelgenauigkeit weiter erhöht werden.

Dadurch, dass der erste Führungsdorn das Anschlagmittel, insbesondere das erste Anschlagmittel, und/oder der mindestens eine zweite Führungsdorn das Anschlagmittel, insbesondere das mindestens eine zweite Anschlagmittel, bildet, kann die Montagevorrichtung bauteilreduziert und kompakt ausgebildet werden.

Bei einer Weiterbildung letztgenannter Ausführungsform umfasst die Montagevorrichtung eine erste Andrückeinheit und zwei parallel nebeneinander angeordnete zweite Andrückeinheiten sowie vier erste Führungsdorne, von denen jeweils zwei erste Führungsdorne an einer Seitenplatte festgelegt sind und/oder durch zwei zweite Führungsdorne, von denen jeweils ein zweiter Führungsdorn an einer Stützwand festgelegt ist und wobei die zwei ersten Andrückeinheiten die zwei ersten Führungsdorne an einer Seitenplatte mit dem Gabelabschnitt des Andrückmittels umgreifen und die an der gegenüberliegenden Seitenplatte angeordneten zwei ersten Führungsdorne die ersten Anschlagmittel bilden und wobei die zweite Andrückeinheit den zweiten Führungsdorn an einer Stützwand mit dem Gabelabschnitt des Andrückmittels umgreift und der an der gegenüberliegenden Stützwand angeordnete zweite Führungsdorn das zweite Anschlagmittel bildet.

Schließlich erweist es sich als vorteilhaft, wenn mindestens eines des mindestens einen Bauteils oder mehrere Bauteile einen Stack für eine elektronische Komponente, wie Brennstoffzelle, Batterie oder Elektrolyseur, umfasst, insbesondere eine Membran-Elektrodeneinheit (MEA), eine Bipolarplatte (BBP) und/oder ein Elektrolyseurbauteil zum Bilden einer Brennstoffzelle, einer Batterie oder eines Elektrolyseurs.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Montagevorrichtung.

In der Zeichnung zeigt:
- Figur 1: Eine perspektivische Vorderansicht auf ein Ausführungsbeispiel der Montagevorrichtung;

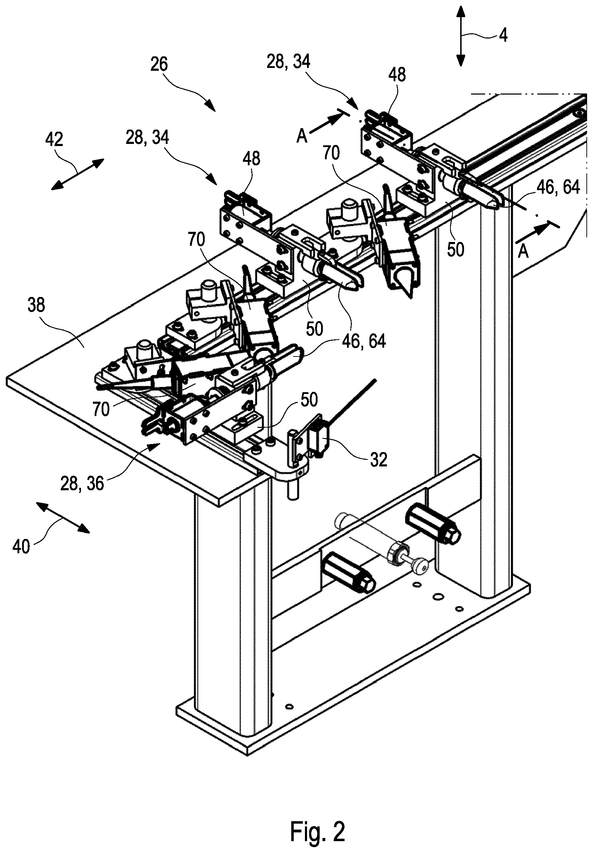

- Figur 2: Eine perspektivische Vorderansicht auf die Ausrichteinrichtung der Montagevorrichtung gemäß Figur 1 ;
- Figur 3: Eine Schnittansicht entlang der Schnittlinie AA.

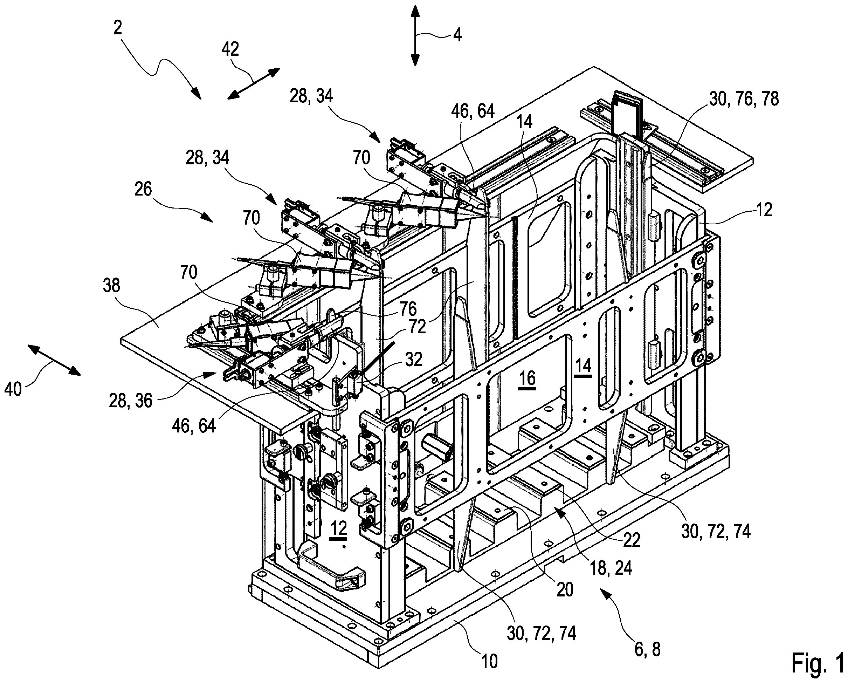

Figur 1 zeigt eine insgesamt mit dem Bezugszeichen 2 versehene Montagevorrichtung zum Anordnen und Stapeln von flächenhaften Bauteilen entlang einer Stapelrichtung 4.

Die Montagevorrichtung 2 umfasst eine Werkstückträgereinrichtung 6, die mindestens einen Werkstückträger 8 umfasst. Der Werkstückträger 8 umfasst bei den in Figur 1 ersichtlichen Ausführungsbeispiel eine Grundplatte 10, zwei einander gegenüberliegende Stützwände 12, die an der Grundplatte 10 festgelegt sind und zwei einander gegenüberliegende und an den Stützwänden 12 festgelegten Seitenplatten 14.

Entlang der Stapelrichtung 4 sind Bauteile in einem durch die Stützwände 12 und die Seitenplatten 14 umrahmten Freiraum 16 stapelbar. Die Figuren zeigen die Montagevorrichtung 2 ohne darin angeordnete Bauteile.

Die Montagevorrichtung 2 umfasst eine Aufnahmeeinheit 18, durch die ein Ablageort 20 definierbar ist, an dem Bauteile abgelegt werden können. Die Aufnahmeeinheit 18 umfasst eine Auflageplatte 22, die durch einen Antrieb 24 in und entgegen der Stapelrichtung 4 verfahrbar ist. Figur 1 zeigt die Montagevorrichtung 2 mit der Auflageplatte 22 in einer Ruheposition, in der die Auflageplatte 22 an der Grundplatte 10 anliegt.

Wenn die Auflageplatte 22 in eine Start-Aufnahmeposition überführt wird, bildet diese den Ablageort 20. In der Start-Aufnahmeposition ist der Abstand zwischen Auflageplatte 22 und Grundplatte 10 maximal (in den Figuren nicht gezeigt).

Darüber hinaus umfasst die Montagevorrichtung 2 eine Ausrichteinrichtung 26, die mehrere Andrückeinheiten 28 umfasst. Durch die Andrückeinheiten 28 ist ein am Ablageort 20 abgelegtes Bauteil in eine quer zur Stapelrichtung 4 verlaufende Ausrichteinrichtung 26 bewegbar und an ein Anschlagmittel 30 andrückbar.

Um die Aufnahmeeinheit 18 verbessert ansteuern zu können, um die Auflageplatte 22 durch den Antrieb 24 bezüglich der Stapelrichtung 4 in eine IST-Lage des Ablageorts 20 zu bringen, die einer SOLL-Lage entspricht, umfasst die Montagevorrichtung 2 einen Höhensensor 32.

Bei dem in den Figuren gezeigten Ausführungsbeispiel umfasst die Ausrichteinrichtung 26 zwei erste Andrückeinheiten 34 und eine zweite Andrückeinheit 36. Diese sind an einem Halter 38 der Ausrichteinrichtung 26 festgelegt. Durch die ersten Andrückeinheiten 34 ist ein Bauteil entlang einer ersten Ausrichtrichtung 40 quer zur Stapelrichtung 4 bewegbar.

Durch die zweite Andrückeinheit 36 ist das am Ablageort 20 abgelegte Bauteil quer zur Stapelrichtung 4 und quer zur ersten Ausrichtrichtung 40 entlang einer zweiten Ausrichtrichtung 42 bewegbar. Hierbei wird das Bauteil an einem zweiten Anschlagmittel 78 angedrückt. Durch die ersten Andrückeinheiten 34 wird das Bauteil, das sich am Ablageort 20 befindet, an erste Anschlagmittel 74 angedrückt.

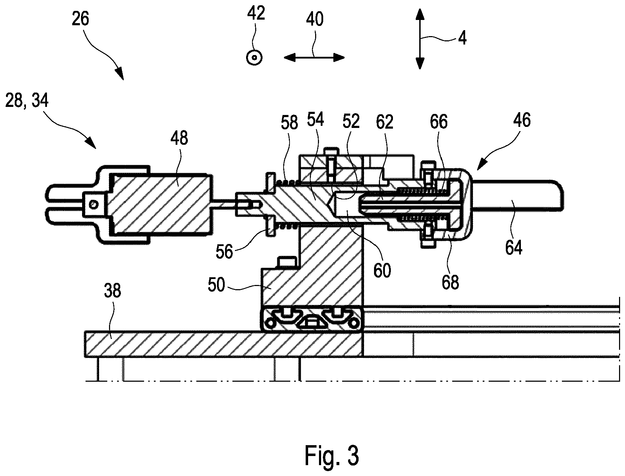

Anhand der entlang des Schnitts der Linie AA gezeigten Schnittansicht gemäß Figur 3 wird ein Aufbau einer Andrückeinheit 28 näher beschrieben:
Jede Andrückeinheit 28 umfasst ein Andrückmittel 46 und einen Andrückantrieb 48. Durch den Andrückantrieb 48 ist das Andrückmittel 46 von einer Ruhestellung, in der das Andrückmittel 46 zum Bauteil berührungsfrei beabstandet ist, in eine Andrückstellung überführbar, in der das Andrückmittel 46 unmittelbar am mindestens einen Bauteil anliegt.

Um Andrückmittel 46 und Andrückantrieb 48 am Halter 38 festlegen zu können, umfasst die Ausrichteinrichtung 26 ein Festlegemittel 50. Mit Blick in Figur 3 ist ersichtlich, dass das Festlegemittel 50 zugleich ein Führungsmittel 52 bildet. Das Führungsmittel 52 ist durch eine entlang der jeweiligen Ausrichtrichtung erstreckte, durchgehende Öffnung im Festlegemittel 50 gebildet. In diesem durch die durchgehende Öffnung gebildeten Führungsmittel 52 ist ein zylinderartiger Übertragungskörper 54 der jeweiligen Andrückeinheit 28 angeordnet, der kraftübertragend zwischen Andrückantrieb 48 und Andrückmittel 46 angeordnet ist.

Auf einer dem Andrückantrieb 48 zugewandten Seite umfasst der Übertragungskörper 54 einen Ringabschnitt 56, der bezüglich der jeweiligen Ausrichtrichtung einen größeren Querschnitt umfasst, als das durch die durchgehende Öffnung gebildeten Führungsmittel 52. Zwischen Ringabschnitt 56 und Festlegemittel 50 ist ein Federelement 58 angeordnet.

Durch das Federelement 58 wird der Ringabschnitt 56 in Richtung Ruhestellung bewegt, wodurch ein Rückstellmittel gebildet wird, das die jeweilige Andrückeinheit 28 in die unbetätigte Ruhestellung führt.

Auf der dem Bauteil zugewandten Seite umfasst der Übertragungskörper 54 eine in die jeweilige Ausrichtrichtung erstreckte Aussparung 60, in der das Andrückmittel 46 mit einem korrespondierend, insbesondere komplementär, ausgebildeten Gleitbereich 62 in der Aussparung 60 angeordnet ist.

An den Gleitbereich 62 in Richtung Bauteil anschließend, umfasst das Antriebmittel 46 einen gabelartigen Kopfabschnitt 64, der bezüglich der jeweiligen Ausrichtrichtung einen größeren Querschnitt umfasst, als die Aussparung 60 im Übertragungskörper 54. Zwischen Kopfabschnitt 64 und Aussparung 60 ist ein Dämpfelement 66 vorgesehen.

Ferner umfasst die jeweilige Andrückeinheit 28 ein Bewegungsbegrenzungsmittel 68, das in den gabelartigen Kopfabschnitt 64 des Andrückmittels 46 auf einer dem Bauteil zugewandten Seite zumindest abschnittsweise eingreift und einen Anschlag bildet. Durch die Kombination von zwischen Aussparung 60 und Kopfabschnitt 64 angeordneten Dämpfelement 66 und Bewegungsbegrenzungsmittel 68 ist ein Überlastschutz gebildet, durch den das Andrückmittel 46 entgegen der jeweiligen Ausrichtrichtung das Dämpfmittel komprimiert, wenn eine bestimmte Kraft, mit dem das Andrückmittel 46 auf das Bauteil wirkt, überschritten wird. Durch das Bewegungsbegrenzungsmittel 68 ist das Andrückmittel 46 relativ zum Übertragungskörper 54 in seiner Bewegung begrenzt und im Übertragungskörper 54 festgelegt.

Um das Ergebnis des Andrückens der jeweiligen Andrückeinheit 28 zu erfassen und gegebenenfalls durch erneutes Ansteuern der jeweiligen Andrückeinheit 28 zu korrigieren, umfasst die Montagevorrichtung zwei Lagesensoren 70, durch die zumindest eine IST-Lage des Bauteils in einer Ebene quer zur Stapelrichtung 4 erfassbar und die erste Andrückeinheit 34 und/oder die zweite Andrückeinheit 36 zum Anpassen der IST-Lage des Bauteils an eine SOLL-Lage des Bauteils anzusteuern.

Bei dem in Figur 1 gezeigten Ausführungsbeispiel umfasst der Werkstückträger 8 vier erste Führungsdorne 72, von denen jeweils zwei erste Führungsdorne 72 an einer Seitenplatte 14 angeordnet sind und das Bauteil zur jeweiligen Seitenplatte 14 berührungsfrei beabstanden. Die ersten Führungsdorne 72 erstrecken sich in Gänze durch den Freiraum 16. Zwei der vier ersten Führungsdorne 72 sind an einer Seitenplatte 14 angeordnet, an die der Halter 38 der Ausrichteinrichtung 26 festgelegt ist.

Die Andrückmittel 46 umgreifen die dortigen ersten Führungsdorne 72 mit ihrem gabelartigen Kopfabschnitt 64 der Andrückmittel 46. Die gabelartigen Kopfabschnitt 64 haben dabei einen derartigen Freiraum 16, der korrespondierend, insbesondere komplementär, zum Querschnitt der ersten Führungsdorne 72 entspricht.

Auf der der Seitenplatte 14 gegenüberliegenden Seitenplatte 14, an der keine Ausrichteinrichtung 26 angeordnet ist, bilden die dortigen ersten Führungsdorne 72 als erste Anschlagmittel 74 ausgebildete Anschlagmittel 30.

Darüber hinaus umfasst die Werkstückträgereinrichtung 6 bei dem in Figur 1 ersichtlichen Ausführungsbeispiel zwei zweite Führungsdorne 76, von denen jeweils ein zweiter Führungsdorn 76 an einer Stützwand 12 angeordnet ist. An einer der beiden Stützwände 12 ist eine zweite Andrückeinheit 36 angeordnet, die den dortigen Führungsdorn 76 ebenfalls mit dem gabelartigen Kopfabschnitt 64 umgreift. Der gegenüberliegende zweite Führungsdorn 76 bildet an der dortigen Stützwand 12 ein als zweites Anschlagmittel 78 ausgebildetes Anschlagmittel 30.

### Bezugszeichenliste

- 2: Montagevorrichtung
- 4: Stapelrichtung
- 6: Werkstückträgereinrichtung
- 8: Werkstückträger
- 10: Grundplatte
- 12: Stützwand
- 14: Seitenplatte
- 16: Freiraum
- 18: Aufnahmeeinheit
- 20: Ablageort
- 22: Auflageplatte
- 24: Antrieb
- 26: Ausrichteinrichtung
- 28: Andrückeinheit
- 30: Anschlagmittel
- 32: Höhensensor
- 34: erste Andrückeinheit
- 36: zweite Andrückeinheit
- 38: Halter
- 40: erste Ausrichtrichtung
- 42: zweite Ausrichtrichtung
- 46: Andrückmittel
- 48: Andrückantrieb
- 50: Festlegemittel
- 52: Führungsmittel
- 54: Übertragungskörper
- 56: Ringabschnitt
- 58: Federelement
- 60: Aussparung
- 62: Gleitbereich
- 64: Kopfabschnitt
- 66: Dämpfelement
- 68: Bewegungsbegrenzungsmittel
- 70: Lagesensor
- 72: erster Führungsdorn
- 74: erstes Anschlagmittel
- 76: zweiter Führungsdorn
- 78: zweites Anschlagmittel

## Patentansprüche

1. Montagevorrichtung (2) zum Anordnen und Stapeln von flächenhaften Bauteilen entlang einer Stapelrichtung (4), mit mindestens einer Werkstückträgereinrichtung (6), die mindestens einen Werkstückträger (8), der zumindest aus einer Grundplatte (10), zwei einander gegenüberliegenden und jeweils an der Grundplatte (10) festgelegten Stützwänden (12) und zwei einander gegenüberliegenden und an den Stützwänden (12) festgelegten Seitenplatten (14) gebildet ist und in dem flächenhafte Bauteile entlang einer Stapelrichtung (4) in einem durch die Stützwände (12) und die Seitenplatten (14) umrahmten Freiraum (16) stapelbar sind, und die mindestens eine wenigstens einen Ablageort (20) zum Ablegen eines neuen Bauteil definierende Aufnahmeeinheit (18) umfasst, und mit mindestens einer Ausrichteinrichtung (26), die mindestens eine Andrückeinheit (28) umfasst, durch die mindestens ein an dem Ablageort (20) abgelegtes Bauteil in eine quer zur Stapelrichtung (4) verlaufende Ausrichtrichtung bewegbar und an ein Anschlagmittel (30) andrückbar ist, wobei die Andrückeinheit (28) der Ausrichteinrichtung (26) mindestens ein Andrückmittel (46) und mindestens einen Andrückantrieb (48) umfasst, mit dem das Andrückmittel (46) von einer Ruhestellung, in der das Andrückmittel (46) zum Bauteil berührungsfrei beanstandet ist, in eine Andrückstellung überführbar ist, in der das Andrückmittel (46) unmittelbar am mindestens einen Bauteil anliegt, **dadurch gekennzeichnet, dass** die Andrückeinheit (28) der Ausrichteinrichtung (26) mindestens ein Festlegemittel (50) aufweist, das an einem Halter (38) der Ausrichteinrichtung (26) festgelegt ist und an dem das Andrückmittel (46) relativ zum Festlegemittel (50) festlegbar ist und/oder dass die Andrückeinheit (28) der Ausrichteinrichtung (26) mindestens ein Führungsmittel (52) umfasst, durch das das Überführen des Andrückmittels (46) von der Ruhestellung in die Andrückstellung entlang der Ausrichtrichtung führbar ist.

2. Montagevorrichtung (2) nach Anspruch 1, **dadurch gekennzeichnet, dass** die Ausrichteinrichtung (26) bezüglich des Werkstückträgers (8) ortsfest und in Stapelrichtung (4) unbeweglich festgelegt ist oder dass die Ausrichteinrichtung (26) bezüglich des durch die Aufnahmeeinheit (18) definierten Ablageorts (20) ortsfest und relativ zum Werkstückträger (8) in Stapelrichtung (4) durch einen Ausrichtantrieb verfahrbar ist.

3. Montagevorrichtung (2) nach Anspruch 1 oder 2, **dadurch gekennzeichnet, dass** die mindestens eine Aufnahmeeinheit (18), eine Auflageplatte (22) und einen Antrieb (24) umfasst, durch den die Auflageplatte (22) von einer Ruheposition, in der die Auflageplatte (22) an der Grundplatte (10) anliegt, in eine Start-Aufnahmeposition, in der unmittelbar an der Auflageplatte (22) ein Bauteil anordenbar ist und in der ein Abstand von Auflageplatte (22) und Grundplatte (10) maximal ist, und stellschrittweise in eine Mehrzahl von Zwischen-Aufnahmepositionen bis zum Erreichen einer End-Aufnahmeposition überführbar ist, in der eine vorgebbare Anzahl von Bauteilen auf der Auflageplatte (22) gestapelt sind, wobei ein Stellschritt die Erstreckung des jeweils abgelegten Bauteils in Stapelrichtung (4) umfasst, wobei der Ablageort (20) zum Ablegen eines neuen Bauteils ortsfest durch die Auflageplatte (22) in der Start-Aufnahmeposition oder in den Zwischen-Aufnahmepositionen und der End-Aufnahmeposition durch die der Auflageplatte (22) abgewandte freie Oberfläche des Bauteils gebildet ist, die zur Auflageplatte (22) den größten Abstand umfasst.

4. Montagevorrichtung (2) nach einem der vorhergehenden Ansprüche, **gekennzeichnet durch** mindestens einen Höhensensor (32), durch den zumindest eine IST-Lage des Ablageorts (20) in Stapelrichtung (4) erfassbar ist und/oder durch den der Antrieb (24) der Aufnahmeeinheit (18) ansteuerbar ist, um die IST-Lage einer SOLL-Lage anzupassen und/oder durch den der Ausrichtantrieb der Ausrichteinrichtung (26) ansteuerbar ist, um die Position der Ausrichteinrichtung (26) der IST-Lage des Ablageorts (20) anzupassen.

5. Montagevorrichtung (2) nach einem der vorhergehenden Ansprüche, **dadurch gekennzeichnet, dass** das Führungsmittel (52) der Andrückeinheit (28) eine durchgehende Öffnung im Festlegemittel (50) umfasst, die entlang der Ausrichtrichtung verläuft.

6. Montagevorrichtung (2) nach einem der vorhergehenden Ansprüche, **dadurch gekennzeichnet, dass** die Andrückeinheit (28) der Ausrichteinrichtung (26) mindestens einen zylinderartigen Übertragungskörper (54) umfasst, der kraftübertragend zwischen Andrückantrieb (48) und Andrückmittel (46) und/oder der in dem durch die durchgehende Öffnung gebildeten Führungsmittel (52) angeordnet ist.

7. Montagevorrichtung (2) nach einem der vorhergehenden Ansprüche, **dadurch gekennzeichnet, dass** die Andrückeinheit (28) der Ausrichteinrichtung (26) ein Rückstellmittel umfasst, durch das das Andrückmittel (46) in die Ruhestellung spannbar ist, insbesondere dass das Rückstellmittel einen Ringabschnitt (56) am Übertragungskörper (54), der bezüglich der Ausrichtrichtung einen größeren Querschnitt umfasst, als die durchgehende Öffnung und der auf einer dem Andrückmittel (46) abgewandten Seite des Festlegemittels (50) angeordnet ist, und ein Federelement (58) umfasst, das am Festlegemittel (50) und am Ringabschnitt (56) abgestützt ist und das den Übertragungskörper (54) in die Ruhestellung vorspannt.

8. Montagevorrichtung (2) nach einem der vorhergehenden Ansprüche, **dadurch gekennzeichnet, dass** die Andrückeinheit (28) der Ausrichteinrichtung (26) mindestens ein Überlastschutzmittel umfasst, durch das eine von dem Andrückantrieb (48) auf das Andrückmittel (46) übertragenen Kraft reduzierbar ist, insbesondere dass das Überlastschutzmittel eine in Ausrichtrichtung erstreckte Aussparung (60) im Übertragungskörper (54), in der das Andrückmittel (46) mit einen korrespondierend, insbesondere komplementär, ausgebildeten Gleitbereich (62) anordenbar ist, einen gabelartigen Kopfabschnitt (64) des Andrückmittels (46), der bezüglich der Ausrichtrichtung einen größeren Querschnitt umfasst als die Aussparung (60) im Übertragungskörper (54), ein zwischen der dem Bauteil abgewandten Seite des gabelartigen Kopfabschnitts (64) des Andrückmittels (46) und der Aussparung (60) im Übertragungskörper (54) angeordnetes Dämpfelement (66) und ein Bewegungsbegrenzungsmittel (68) umfasst, das in den gabelartigen Kopfabschnitt (64) auf einer dem Bauteil zugewandten Seite zumindest abschnittweise eingreift und einen Anschlag bildet und das am Übertragungskörper (54) festgelegt ist.

9. Montagevorrichtung (2) nach einem der vorhergehenden Ansprüche, **dadurch gekennzeichnet, dass** die Ausrichteinrichtung (26) mindestens eine erste Andrückeinheit (34) umfasst, durch die mindestens ein an dem Ablageort (20) abgelegtes Bauteil in eine quer zur Stapelrichtung (4) verlaufende erste Ausrichtrichtung (40) bewegbar und an ein erstes Anschlagmittel (74) andrückbar ist, und die mindestens eine zweite Andrückeinheit (36) umfasst, durch die das an dem Ablageort (20) abgelegte Bauteil in eine quer zur Stapelrichtung (4) und quer zur ersten Ausrichtrichtung (40) verlaufende zweite Ausrichtrichtung (42) bewegbar und an ein zweites Anschlagmittel (78) andrückbar ist.

10. Montagevorrichtung (2) nach einem der vorhergehenden Ansprüche, **gekennzeichnet durch** mindestens einen Lagesensor (70), durch den zumindest eine IST-Lage des Bauteils in einer Ebene quer zur Stapelrichtung (4) erfassbar ist und/oder durch den mindestens eine der ersten Andrückeinheit (34) und/oder mindestens eine der zweiten Andrückeinheit (36) ansteuerbar ist, um die IST-Lage einer SOLL-Lage anzupassen.

11. Montagevorrichtung (2) nach einem der vorhergehenden Ansprüche, **dadurch gekennzeichnet, dass** die Werkstückträgereinrichtung (6) mindestens einen ersten Führungsdorn (72), der an einer Seitenplatte (14) angeordnet ist und das Bauteil zur Seitenplatte (14) berührungsfrei beanstandet und der eine Führungskante aufweist, die parallel zur Stapelrichtung (4) verläuft und sich in Gänze oder zumindest teilweise durch den Freiraum (16) erstreckt und die in einer korrespondierend, insbesondere komplementär, ausgebildeten Nut im Bauteil am Bauteil anliegend anordenbar ist, und/oder die mindestens einen zweiten Führungsdorn (76) umfasst, der an einer Stützwand (12) angeordnet ist und das Bauteil zur Stützwand (12) berührungsfrei beanstandet und der der eine Führungskante aufweist, die parallel zur Stapelrichtung (4) verläuft und sich in Gänze oder zumindest teilweise durch den Freiraum (16) erstreckt und die in einer korrespondierend, insbesondere komplementär ausgebildete Nut im Bauteil am Bauteil anliegend anordenbar ist, wobei mindestens einer des mindestens einen ersten Führungsdorns (72) das Anschlagmittel (30), insbesondere das mindestens eine erste Anschlagmittel (74), und/oder wobei mindestens einer des mindestens einen zweiten Führungsdorns (76) das Anschlagmittel (30), insbesondere das mindestens eine zweite Anschlagmittel (78), bildet.

12. Montagevorrichtung (2) nach Anspruch 11, **gekennzeichnet durch** eine erste Andrückeinheit (34) und durch zwei parallel nebeneinander angeordnete zweite Andrückeinheiten (36) und durch vier erste Führungsdorne (72), von denen jeweils zwei erste Führungsdorne (72) an einer Seitenplatte (14) festgelegt sind und/oder durch zwei zweite Führungsdorne (76), von denen jeweils ein zweiter Führungsdorn (76) an einer Stützwand (12) festgelegt ist und wobei die zwei ersten Andrückeinheiten (34) die zwei ersten Führungsdorne (72) an einer Seitenplatte (14) mit dem Gabelabschnitt des Andrückmittels (46) umgreifen und die an der gegenüberliegenden Seitenplatte (14) angeordneten zwei ersten Führungsdorne (72) die ersten Anschlagmittel (74) bilden und wobei die zweite Andrückeinheit (36) den zweiten Führungsdorn (76) an einer Stützwand (12) mit dem Gabelabschnitt des Andrückmittels (46) umgreift und der an der gegenüberliegenden Stützwand (12) angeordnete zweite Führungsdorn (76) das zweite Anschlagmittel (78) bildet.

## Claims

1. Assembly device (2) for arranging and stacking sheet-like components along a stacking direction (4), having at least one workpiece carrier device (6) which comprises at least one workpiece carrier (8) which is formed from at least one base plate (10), two mutually opposite supporting walls (12) fixed to the base plate (10) and two mutually opposite side plates (14) fixed to the supporting walls (12) and in which sheet-like components can be stacked along a stacking direction (4) in a free space (16) framed by the supporting walls (12) and the side plates (14), and which comprises at least one receiving unit (18) defining at least one depositing location (20) for depositing a new component, and with at least one aligning device (26) which comprises at least one pressing unit (28) by means of which at least one component deposited at the depositing location (20) can be moved in an aligning direction extending transversely to the stacking direction (4) and can be pressed against a stop means (30), wherein the pressing unit (28) of the aligning device (26) comprises at least one pressing means (46) and at least one pressing drive (48), with which the pressing means (46) can be transferred from a rest position, in which the pressing means (46) is in contact-free contact with the component, into a pressing position, in which the pressing means (46) bears directly against the at least one component, **characterised in that** the pressing unit (28) of the alignment device (26) has at least one fixing means (50) which is fixed on a holder (38) of the alignment device (26) and on which the pressing means (46) can be fixed relative to the fixing means (50) and/or **in that** the pressing unit (28) of the alignment device (26) comprises at least one guide means (52) by which the transfer of the pressing means (46) from the rest position into the pressing position can be guided along the alignment direction.

2. Installation device (2) according to Claim 1, **characterised in that** the alignment device (26) is fixed with respect to the workpiece carrier (8) and fixed in the stacking direction (4), or **in that** the alignment device (26) is fixed with respect to the placement location (20) defined by the receiving unit (18) and can be moved relative to the workpiece carrier (8) in the stacking direction (4) by an alignment drive.

3. Assembly device (2) according to Claim 1 or 2, **characterised in that** the at least one mounting unit (18) comprises a support plate (22) and a drive (24), by means of which the support plate (22) is moved from a rest position, in which the support plate (22) rests against the base plate (10), into a start mounting position, in which a component can be arranged directly on the support plate (22) and in which a distance between the support plate (22) and the base plate (10) is at a maximum, and can be transferred stepwise into a plurality of intermediate pick-up positions until a final pick-up position is reached, in which a pre-determinable number of components are stacked on the support plate (22), wherein a positioning step comprises the extension of the respective deposited component in the stacking direction (4), wherein the deposit location (20) for depositing a new component is formed in a stationary manner by the support plate (22) in the start pick-up position or in the intermediate pick-up positions and in the end pick-up position by the free surface of the component facing away from the support plate (22), which surface comprises the greatest distance from the support plate (22).

4. Mounting device (2) according to one of the preceding claims, **characterised by** at least one height sensor (32), by means of which at least one ACTUAL position of the deposit location (20) in the stacking direction (4) can be detected and/or by means of which the drive (24) of the receiving unit (18) can be activated in order to adapt the ACTUAL position to a TARGET position and/or by means of which the alignment drive of the alignment device (26) can be activated in order to adapt the position of the alignment device (26) to the ACTUAL position of the deposit location (20).

5. Assembly device (2) according to one of the preceding claims, **characterised in that** the guide means (52) of the pressing unit (28) comprises a continuous opening in the locating means (50), which extends along the alignment direction.

6. Assembly device (2) according to one of the preceding claims, **characterised in that** the pressing unit (28) of the alignment device (26) comprises at least one cylindrical transmission body (54) which is arranged in a force-transmitting manner between the pressure drive (48) and the pressure means (46) and/or which is arranged in the guide means (52) formed by the through-opening.

7. Assembly device (2) according to one of the preceding claims, **characterised in that** the pressing unit (28) of the alignment device (26) comprises a resetting means by which the pressure means (46) can be clamped into the rest position, in particular **in that** the resetting means comprises an annular section (56) on the transmission body (54), which has a larger cross-section with respect to the alignment direction than the through-opening and which is arranged on a side of the fixing means (50) facing away from the pressure means (46), and a spring element (58) which is supported on the fixing means (50) and on the ring section (56) and which biases the transmission body (54) into the rest position.

8. Assembly device (2) according to one of the preceding claims, **characterised in that** the pressing unit (28) of the alignment device (26) comprises at least one overload protection means, by means of which a force transmitted by the pressure drive (48) to the pressure means (46) can be reduced, in particular that the overload protection means comprises a recess (60) in the transmission body (54), which recess extends in the alignment direction and in which the pressure means (46) can be arranged with a corresponding, in particular complementary, sliding area (62), a fork-like head section (64) of the pressure means (46), which comprises a larger cross-section than the recess (60) in the transmission body (54) with respect to the alignment direction, a damping element (66) arranged between the side of the fork-like head section (64) of the pressing means (46) facing away from the component and the recess (60) in the transmission body (54), and a movement-limiting means (68), which engages at least in sections in the fork-like head section (64) on a side facing the component and forms a stop and which is fixed to the transmission body (54).

9. Assembly device (2) according to one of the preceding claims, **characterised in that** the alignment device (26) comprises at least one first pressing unit (34), by means of which at least one component deposited at the depositing location (20) can be moved in a first alignment direction (40) extending transversely to the stacking direction (4) and can be pressed against a first stop means (74), and which comprises at least one second pressing unit (36), by means of which the component deposited at the depositing location (20) can be moved in a second alignment direction (42) extending transversely to the stacking direction (4) and transversely to the first alignment direction (40) and can be pressed against a second stop means (78).

10. Assembly device (2) according to one of the preceding claims, **characterised by** at least one position sensor (70), by means of which at least one ACTUAL position of the component can be detected in a plane transverse to the stacking direction (4) and/or by means of which at least one of the first pressing unit (34) and/or at least one of the second pressing unit (36) can be activated in order to adapt the ACTUAL position to a SET position.

11. Assembly device (2) according to one of the preceding claims, **characterised in that** the workpiece carrier device (6) has at least one first guide pin (72), which is arranged on a side plate (14) and which contacts the component to the side plate (14) without contact and which has a guide edge, which runs parallel to the stacking direction (4) and extends in its entirety or at least partially through the free space (16) and which can be arranged in a corresponding, in particular complementary, groove in the component so as to bear against the component, and/or which comprises at least one second guide pin (76), which is arranged on a support wall (12) and which bears against the component in relation to the support wall (12) without contact and which has a guide edge which runs parallel to the stacking direction (4) and extends completely or at least partially through the free space (16) and which can be arranged to bear against the component in a corresponding, in particular complementary, groove in the component, wherein at least one of the at least one first guide pin (72) forms the stop means (30), in particular the at least one first stop means (74), and/or wherein at least one of the at least one second guide pin (76) forms the stop means (30), in particular the at least one second stop means (78).

12. Assembly device (2) according to Claim 11, **characterised by** a first pressing unit (34) and by two second pressing units (36) arranged parallel to one another and by four first guide pins (72), of which in each case two first guide pins (72) are fixed to a side plate (14) and/or by two second guide pins (76), of which in each case a second guide pin(76) is fixed to a supporting wall (12) and wherein the two first pressing units (34) engage around the two first guide pins (72) on one side plate (14) with the fork portion of the pressing means (46) and the two first guide pins (72) arranged on the opposite side plate (14) engage around the first guide pins (72) with the fork portion of the pressing means (46) and guide pins (72) arranged on the opposite side plate (14) form the first stop means (74) and wherein the second pressing unit (36) engages around the second guide pin (76) on a support wall (12) with the fork portion of the pressing means (46) and the second guide pin (76) arranged on the opposite support wall (12) forms the second stop means (78).

## Revendications

1. Dispositif de montage (2) pour disposer et empiler des composants plats le long d'une direction d'empilage (4), avec au moins un dispositif porte-pièce (6), qui comprend au moins un porte-pièce (8), qui est constitué au moins d'une plaque de base (10), de deux parois d'appui (12) opposées l'une à l'autre et fixées respectivement à la plaque de base (10) et de deux plaques latérales (14) opposées l'une à l'autre et fixées aux parois d'appui (12) et dans lequel des composants plats peuvent être empilés le long d'une direction d'empilage (4) dans un espace libre (16) encadré par les parois d'appui (12) et les plaques latérales (14), et qui comprend au moins une unité de réception (18) définissant au moins un lieu de dépôt (20) pour déposer un nouveau composant, et avec au moins un dispositif d'alignement (26) qui comprend au moins une unité de pression (28), par laquelle au moins un composant déposé au lieu de dépôt (20) peut être déplacé dans une direction d'alignement s'étendant transversalement à la direction d'empilage (4) et peut être pressé contre un moyen de butée (30), l'unité de pression (28) du dispositif d'alignement (26) comprenant au moins un moyen de pression (46) et au moins un entraînement de pression (48), avec lequel le moyen de pression (46) peut être transféré d'une position de repos, dans laquelle le moyen de pression (46) est maintenu sans contact par rapport au composant, à une position de pression dans laquelle le moyen de pression (46) est en contact direct avec au moins un composant, **caractérisé en ce que** l'unité de pression (28) du dispositif d'alignement (26) présente au moins un moyen de fixation (50), qui est fixé à un support (38) du dispositif d'alignement (26) et sur lequel le moyen de pression (46) peut être fixé par rapport au moyen de fixation (50) et/ou **en ce que** l'unité de pression (28) du dispositif d'alignement (26) comprend au moins un moyen de guidage (52) par lequel le transfert du moyen de pression (46) de la position de repos à la position de pression peut être guidé le long de la direction d'alignement.

2. Dispositif de montage (2) selon la revendication 1, **caractérisé en ce que** le dispositif d'alignement (26) est fixe par rapport au porte-pièce (8) et immobile dans la direction d'empilage (4) ou **en ce que** le dispositif d'alignement (26) est fixe par rapport au lieu de dépôt (20) défini par l'unité de réception (18) et peut être déplacé par rapport au porte-pièce (8) dans la direction d'empilage (4) par un entraînement d'alignement.

3. Dispositif de montage (2) selon la revendication 1 ou 2, **caractérisé en ce qu'**il comprend au moins une unité de réception (18), une plaque d'appui (22) et un entraînement (24), par lequel la plaque d'appui (22) peut être transférée d'une position de repos, dans laquelle la plaque d'appui (22) est en contact avec la plaque de base (10), dans une position de réception de départ, dans laquelle un composant peut être disposé directement sur la plaque d'appui (22) et dans laquelle la distance entre la plaque d'appui (22) et la plaque de base (10) est maximale, et peut être amené par étapes de réglage dans une multitude de positions de réception intermédiaires jusqu'à ce qu'une position de réception finale soit atteinte, dans laquelle un nombre prédéfinissable de composants sont empilés sur la plaque d'appui (22), une étape de réglage comprenant l'extension du composant respectivement déposé dans la direction d'empilage(4), le lieu de dépôt (20) pour déposer un nouveau composant étant formé de manière fixe par la plaque d'appui (22) dans la position de réception initiale ou dans les positions de réception intermédiaires et la position de réception finale par la surface libre du composant opposée à la plaque d'appui (22), qui comprend la plus grande distance par rapport à la plaque d'appui (22).

4. Dispositif de montage (2) selon l'une des revendications précédentes, **caractérisé par** au moins un capteur de hauteur (32), par lequel au moins une position RÉELLE du lieu de dépôt (20) peut être détectée dans la direction d'empilage (4) et/ou par lequel l'entraînement (24) de l'unité de réception (18) peut être commandé pour aligner la position RÉELLE à une position de CONSIGNE et/ou par lequel l'entraînement d'alignement du dispositif d'alignement (26) peut être commandé pour aligner la position du dispositif d'alignement (26) à la position RÉELLE du lieu de dépôt (20).

5. Dispositif de montage (2) selon l'une des revendications précédentes, **caractérisé en ce que** le moyen de guidage (52) de l'unité de pression (28) comprend une ouverture traversante dans le moyen de fixation (50) qui s'étend le long de la direction d'alignement.

6. Dispositif de montage (2) selon l'une des revendications précédentes, **caractérisé en ce que** l'unité de pression (28) du dispositif d'alignement (26) comprend au moins un corps de transmission (54) de type cylindrique, qui est disposé de manière à transmettre la force entre l'entraînement de pression (48) et le moyen de pression (46) et/ou qui est disposé dans le moyen de guidage (52) formé par l'ouverture traversante.

7. Dispositif de montage (2) selon l'une des revendications précédentes, **caractérisé en ce que** l'unité de pression (28) du dispositif d'alignement (26) comprend un moyen de rappel par lequel le moyen de pression (46) peut être serré dans la position de repos, en particulier **en ce que** le moyen de rappel comprend une section annulaire (56) sur le corps de transmission (54), qui comprend, par rapport à la direction d'alignement, une section transversale plus grande que l'ouverture traversante et qui est disposée sur un côté du moyen de fixation (50) opposé au moyen de pression (46), et comprend un élément de ressort (58) qui s'appuie sur le moyen de fixation (50) et sur la section annulaire (56) et qui précontraint le corps de transmission (54) dans la position de repos.

8. Dispositif de montage (2) selon l'une des revendications précédentes, **caractérisé en ce que** l'unité de pression (28) du dispositif d'alignement (26) comprend au moins un moyen de protection contre les surcharges, grâce auquel une force transmise par l'entraînement de pression (48) au moyen de pression (46) peut être réduite, en particulier **en ce que** le moyen de protection contre les surcharges comprend un évidement (60) dans le corps de transmission (54), qui s'étend dans la direction d'alignement et dans lequel le moyen de pression (46) peut être disposé avec une zone de glissement (62) de forme correspondante, en particulier complémentaire, une section de tête (64) en forme de fourche du moyen de pression (46), qui, par rapport à la direction d'alignement, comprend une section transversale plus grande que l'évidement (60) dans le corps de transmission (54), un élément d'amortissement (66) disposé entre le côté de la section de tête (64) en forme de fourche du moyen de pression (46) opposé au composant et l'évidement (60) dans le corps de transmission (54), et un moyen de limitation de mouvement (68), qui s'engage au moins par sections dans la section de tête (64) en forme de fourche sur un côté tourné vers le composant et forme une butée, et qui est fixé au corps de transmission (54).

9. Dispositif de montage (2) selon l'une des revendications précédentes, **caractérisé en ce que** le dispositif d'alignement (26) comprend au moins une première unité de pression (34), par laquelle au moins un composant déposé au lieu de dépôt (20) peut être déplacé dans une première direction d'alignement (40) s'étendant transversalement à la direction d'empilage (4) et peut être pressé contre un premier moyen de butée (74), et qui comprend au moins une deuxième unité de pression (36) par laquelle le composant déposé au lieu de dépôt (20) peut être déplacé dans une deuxième direction d'alignement (42) s'étendant transversalement à la direction d'empilage (4) et transversalement à la première direction d'alignement (40) et peut être pressé contre un deuxième moyen de butée (78).

10. Dispositif de montage (2) selon l'une des revendications précédentes, **caractérisé par** au moins un capteur de position (70), par lequel au moins une position RÉELLE du composant peut être détectée dans un plan transversal à la direction d'empilage (4) et/ou par lequel au moins la première unité de pression (34) et/ou la deuxième unité de pression (36) peut être commandée, afin d'aligner la position RÉELLE à une position DE CONSIGNE.

11. Dispositif de montage (2) selon l'une des revendications précédentes, **caractérisé en ce que** le dispositif porte-pièce (6) comporte au moins un premier mandrin de guidage (72), qui est disposé sur une plaque latérale (14) et qui maintient sans contact le composant par rapport à la plaque latérale (14) et qui présente une arête de guidage, qui est parallèle à la direction d'empilage (4) et s'étend en totalité ou au moins en partie à travers l'espace libre (16) et qui peut être disposée de manière adjacente au composant dans une rainure correspondante, en particulier de forme complémentaire, ménagée dans le composant, et/ou qui comprend au moins un deuxième mandrin de guidage (76), qui est disposé sur une paroi d'appui (12) et qui maintient sans contact le composant par rapport à la paroi d'appui (12) et qui présente une arête de guidage qui est parallèle à la direction d'empilage (4) et qui s'étend en totalité ou au moins en partie à travers l'espace libre (16) et qui peut être disposée de manière adjacente au composant dans une rainure correspondante, en particulier de forme complémentaire, ménagée dans le composant, au moins un premier mandrin de guidage (72) formant le moyen de butée (30), en particulier le au moins premier moyen de butée (74), et/ou au moins un deuxième mandrin de guidage (76) formant le moyen de butée (30), en particulier le au moins deuxième moyen de butée (78).

12. Dispositif de montage (2) selon la revendication 11, **caractérisé par** une première unité de pression (34) et par deux deuxièmes unités de pression (36) disposées parallèlement l'une à côté de l'autre et par quatre premiers mandrins de guidage (72), dont respectivement deux premiers mandrins de guidage (72) sont fixés à une plaque latérale (14) et/ou par deux deuxièmes mandrins de guidage (76), dont respectivement un deuxième mandrin de guidage (76) est fixé à une paroi d'appui (12) et les deux premières unités de pression (34) entourant les deux premiers mandrins de guidage (72) sur une plaque latérale (14) avec la section en forme de fourche du moyen de pression (46) et les deux premiers mandrins de guidage (72) disposés sur la plaque latérale opposée (14) formant les premiers moyens de butée (74) et la deuxième unité de pression (36) entourant le deuxième mandrin de guidage (76) sur une paroi d'appui (12) avec la section en forme de fourche du moyen de pression (46) et le deuxième mandrin de guidage (76) disposé sur la paroi d'appui (12) opposée formant le deuxième moyen de butée (78).
